# FASCICULE DE BREVET EUROPEEN

(11) **EP 1 062 622 B1**
(45) Date de publication et mention de la délivrance du brevet: **04.06.2003**
(21) Numéro de dépôt: 99907698.7
(22) Date de dépôt: 12.03.1999
(51) Int. Cl.: G06K 7/10, G06K 7/08, G06K 7/00

(54) **SYSTEME ET PROCEDE POUR REALISER DES FONCTIONS PARTICULIERES DANS DES ETIQUETTES SANS CONTACT**
SYSTEM UND VERFAHREN ZUM REALISIEREN BESONDERER FUNKTIONEN IN KONTAKTLOSEN ETIKETTEN
SYSTEM AND METHOD FOR PRODUCING PARTICULAR FUNCTIONS IN CONTACTLESS LABELS

(30) Priorité: 20.03.1998 FR 9803472
(43) Date de publication de la demande: 27.12.2000
(73) Titulaire: Gemplus, 13881 Gémenos Cedex (FR)
(72) Inventeur: KALINOWSKI, Richard, F-13470 Carnoux en Provence (FR)
(86) Numéro de dépôt international: FR9900558
(87) Numéro de publication internationale: WO99049410

(56) Documents cités:
- WO-A-98/29826
- FR-A- 2 677 135

## Description

La présente invention concerne l'étiquetage électronique de produits à l'aide d'étiquettes constituées chacune d'un circuit électronique disposé sur un support adhérant au produit à identifier. Elle concerne plus particulièrement un système et un procédé pour inhiber, de manière temporaire ou définitive, toutes ou certaines fonctions de l'étiquette à l'aide d'un dispositif de lecture.

Plus généralement, l'invention concerne un système et un procédé pour réaliser très rapidement des fonctions particulières dans des étiquettes sans contact.

Les produits, notamment ceux de grande consommation, sont identifiés par des codes barre, qui sont lus et analysés au moment du passage à la caisse de manière à en déterminer automatiquement le prix à l'aide d'un système informatique. Ces codes barre sont imprimés sur l'emballage du produit et définissent, par exemple, le nom du fabricant et le type de produit. Ces codes barre ont un rôle purement passif et ne peuvent pas être utilisés pour contrôler le paiement du produit, les dates de péremption, l'état des stocks, le vol, etc ...

Aussi, pour remplir ces nouvelles fonctions, il a été proposé d'utiliser des étiquettes électroniques actives consistant en un circuit électronique miniature ou puce électronique porté par un support adhérant au produit à identifier. Ces étiquettes peuvent être interrogées à distance par un dispositif d'interrogation et de lecture et répondre par des moyens appropriés.

Ces étiquettes électroniques enregistrent, par exemple, un nombre ou code identifiant le type de produit tel que paquet de biscottes identique, plaque de beurre identique, ... ainsi que d'autres codes indiquant, par exemple, la date de péremption, le nom du fabricant.

Les étiquettes dites bas de gamme sont généralement réalisées à l'aide de circuits électroniques ne permettant que la lecture de sorte que leur contenu ne peut évoluer en vue de réaliser certaines fonctions qui nécessitent une écriture dans l'étiquette.

L'une des fonctions qu'il serait intéressant de réaliser dans une étiquette électronique à lecture seule est l'inhibition temporaire ou définitive afin d'interdire une utilisation ou une réutilisation de l'étiquette ou du produit lorsque cela n'est pas autorisé par le fabricant. En outre, il serait aussi intéressant que cette inhibition puisse être totale ou partielle.

On connaît de l'état de la technique la demande de brevet français 2 677 135 qui décrit un protocole d'anticollision dans lequel il est prévu que chaque étiquette puisse s'auto-inhiber automatiquement dès qu'elle estime que son code a été intégralement reconnu par le dispositif de lecture et non sur demande express de ce dernier.

Un but de la présente invention est donc de réaliser un système et de mettre en oeuvre un procédé pour inhiber temporairement ou définitivement de manière partielle ou totale des étiquettes électroniques à lecture sans contact ou à lecture/écriture sans contact.

De manière plus générale, l'invention vise à réaliser un système et à mettre en oeuvre un procédé pour permettre l'utilisation ou non de certaines fonctions de l'étiquette électronique à lecture sans contact ou à lecture/écriture sans contact.

L'invention concerne donc un système de commande de fonctions particulières dans des étiquettes électroniques sans contact à l'aide d'un dispositif de lecture émettant au travers d'une antenne à circuit accord, des signaux à une fréquence porteuse F0, modulés par un modulateur, lesdits signaux émis étant détectés par une antenne à circuit accordé disposée sur chaque étiquette électronique; caractérisé en ce que :
- le dispositif de lecture comprend, en outre, un générateur d'une pluralité de séquences d'impulsions, lesdites impulsions de chaque séquence étant appliquées au modulateur pour modifier de manière caractéristique le signal à la fréquence porteuse,
- l'étiquette électronique comprend, en outre, un circuit de détection des impulsions à modulation caractéristique et un circuit d'interprétation de la séquence d'impulsions, et
- chaque séquence d'impulsions signifie une action différente sur les circuits de l'étiquette électronique.

D'autres caractéristiques et avantages de la présente invention apparaîtront à la lecture de la description suivante d'un exemple particulier de réalisation, ladite description étant faite en relation avec les dessins joints dans lesquels :
- la figure 1 est un schéma fonctionnel d'une étiquette électronique sans contact et d'un dispositif de lecture d'une telle étiquette, selon l'invention,
- les figures 2a à 2f sont des diagrammes de signaux qui sont transmis par le dispositif de lecture à l'étiquette électronique pour réaliser certaines fonctions dans l'étiquette électronique.

L'invention sera décrite dans le cadre de son application à obtenir l'inhibition de certaines fonctions d'une étiquette électronique sans contact à partir d'un dispositif de lecture mais il est clair qu'elle s'applique aussi à des systèmes plus sophistiqués permettant de réaliser un dialogue entre le lecteur et l'étiquette électronique.

Une étiquette électronique sans contact 10 comprend une antenne 12 constituée d'un circuit accordé qui comprend un enroulement d'induction 14 et un condensateur 16. La fréquence d'accord F₀ de l'antenne 12 est par exemple de 13,56 Mégahertz.

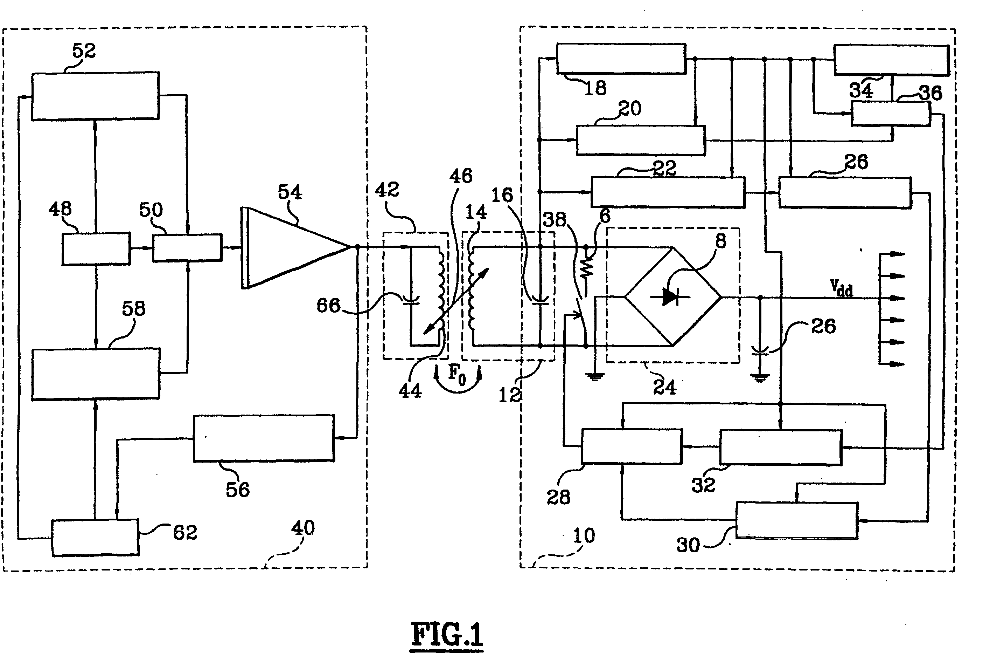

Ce circuit accordé de l'antenne est connecté à différents circuits 18 à 24 qui réalisent chacun une fonction particulière. Ainsi, le circuit 24 réalise la fonction de redressement double alternance du signal aux bornes du circuit accordé, par exemple, par un pont à diodes 8. Ce circuit de redressement est suivi d'un condensateur de filtrage 26 du signal redressé qui fournit la tension d'alimentation V_{dd} de tous les autres circuits de l'étiquette électronique, notamment ceux représentés sur la figure 1. Le circuit 18 réalise la fonction dite Horloge et la synchronisation de cette dernière à partir de la fréquence F₀. Les signaux à différentes fréquences fournis par ce circuit Horloge 18 sont appliqués aux autres circuits de l'étiquette représentés ou non sauf au circuit de redressement 24.

Le circuit 20 réalise la fonction de démodulation et de décodage des signaux qui modulent le signal à la fréquence porteuse F₀, signaux qui constituent l'information reçue par l'étiquette.

Le circuit 22 réalise une fonction typique de l'invention, celle de détection et de mesure des séquences d'extinction du champ magnétique d'antenne comme cela sera expliqué ci-après.

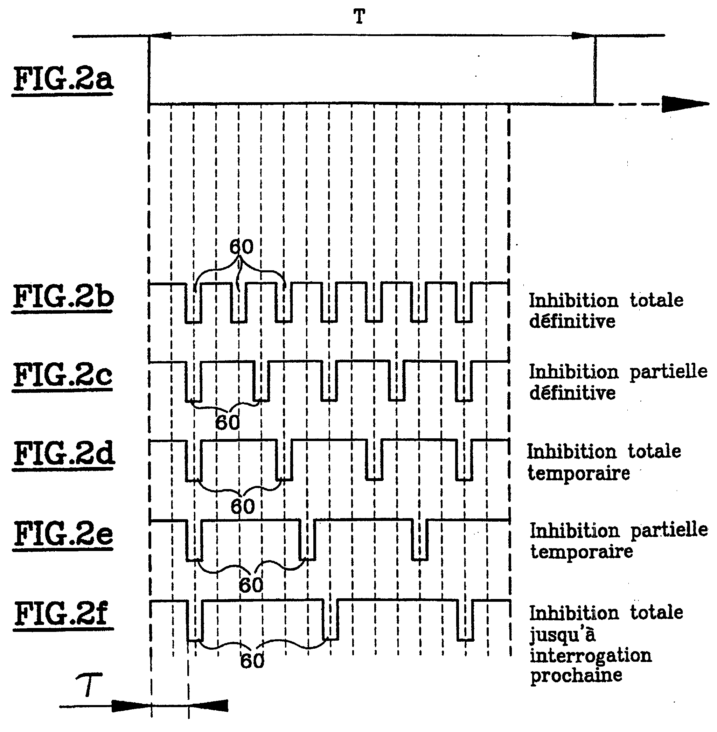

Le circuit 26 réalise aussi une fonction typique de l'invention, celle de l'interprétation des séquences d'extinction du champ magnétique comme cela sera expliqué ci-après en relation avec les diagrammes de la figure 2.

Les signaux résultant de l'interprétation des séquences d'extinction du champ magnétique sont appliqués à un circuit 28 de modulation de charge d'antenne par l'intermédiaire d'un circuit logique 30. Le circuit de modulation 28 reçoit par ailleurs les messages fournis par un circuit 32 qui réalise la synthèse des messages numériques que l'étiquette est susceptible de transmettre au lecteur.

Le modulateur de charge d'antenne a été représenté schématiquement par le circuit 28 et par un interrupteur 38 en parallèle sur le circuit accordé qui est commandé par le circuit 28. Une résistance de charge 6 a été représentée en série avec l'interrupteur 38.

Outre les circuits qui viennent d'être décrits et qui sont nécessaires à la compréhension de l'invention, l'étiquette comprend d'autres circuits électroniques tels qu'une mémoire 34 où sont enregistrées diverses informations relatives au produit portant l'étiquette et des circuits de lecture 36 de cette mémoire. Ces circuits de lecture 36 sont sous le contrôle des signaux détectés et décodés par le circuit 20 et fournissent des signaux qui sont appliqués au circuit de synthèse des messages 32.

Le dispositif de lecture ou lecteur de l'étiquette 10 comprend de manière connue une antenne 42 constituée d'un circuit accordé qui comprend un enroulement d'induction 44 et un condensateur 66, la fréquence d'accord étant F₀. Les deux antennes 12 et 42 sont couplées magnétiquement comme cela est représentée par la flèche 46 et la lettre k représentent le coefficient de couplage.

L'antenne 42 est alimentée par des signaux électriques à la fréquence porteuse F₀ qui sont modulés par des signaux numériques basse fréquence véhiculant l'information à transmettre à l'étiquette 10. Ces signaux électriques modulés sont élaborés par un modulateur 50 qui reçoit, d'une part, un signal à la fréquence F₀ d'un oscillateur 48 et les signaux de modulation d'un générateur de messages 52. Les signaux de sortie du modulateur 50 sont appliqués à un amplificateur de puissance 54 dont la borne de sortie est directement connectée à l'antenne 42.

Les signaux reçus par l'antenne 42 sont appliqués à un circuit de réception 56 qui réalise leur détection, démodulation et décodage.

Selon l'invention, le lecteur 40 comprend, en outre, un générateur 58 de séquences d'extinction de champ électromagnétique dont les signaux de sortie commandent le modulateur 50. Ces séquences sont synchronisées sur le signal fourni par l'oscillateur 48 et peuvent prendre les formes représentées sur les diagrammes des figures 2b à 2f. Les circuits 52 et 58 du lecteur 40 sont sous le contrôle d'un microprocesseur 62, ce dernier ayant également pour fonction d'analyser et d'interpréter les signaux fournis par le circuit 56.

Ces extinctions du champ électromagnétique sont obtenues par une suppression à l'émission du signal à la fréquence porteuse F₀. Cependant, au lieu d'une suppression complète de la porteuse, on peut utiliser des signaux présentant une modulation d'amplitude de la porteuse d'une valeur déterminée, à 50 % par exemple.

Pour que ces extinctions du champ électromagnétique puissent véhiculer différentes informations, l'invention propose de les effectuer à des fréquences différentes selon la signification à leur donner.

Ainsi, sur le diagramme de la figure 2b, les impulsions d'extinction 60 de la séquence élaborées par le générateur 58 sont à la fréquence Fᵣ et signifient, par exemple, une inhibition totale et définitive de l'étiquette 10. La fréquence Fᵣ est un sous-multiple de la fréquence F₀.

De manière similaire, les impulsions d'extinction 60 de la séquence du diagramme de la figure 2c sont, par exemple, à la fréquence Fᵣ/1,5 et signifient, par exemple, une inhibition définitive de certaines fonctions seulement, c'est-à-dire une inhibition partielle définitive.

Les impulsions d'extinction du diagramme de la figure 2d sont, par exemple, à la fréquence Fᵣ/2 et signifient, par exemple, une inhibition totale mais temporaire des fonctions de l'étiquette.

Les impulsions d'extinction du diagramme de la figure 2e sont, par exemple à la fréquence Fᵣ/2,5 et signifient, par exemple, une inhibition temporaire de certaines fonctions, c'est-à-dire une inhibition partielle temporaire.

Enfin, les impulsions d'extinction du diagramme de la figure 2f sont, par exemple, à la fréquence Fᵣ/3 et signifient, par exemple, une inhibition totale des fonctions jusqu'à l'interrogation suivante de l'étiquette.

A titre d'exemple, une inhibition temporaire permettra de réaliser un système anti-vol. Ainsi, l'opératrice, une caissière par exemple, pourra au moment du paiement invalider l'étiquette avant son passage sous le portique de sortie. L'étiquette pourra être validée à nouveau, soit à l'expiration d'un intervalle de temps compté de manière automatique et dont la durée sera liée à l'énergie emmagasinée dans l'étiquette, soit par une instruction du lecteur.

Une inhibition définitive partielle ou totale pourra être mise en oeuvre pour réaliser un système anti-fraude de consommables, par exemple les emballages ou cassettes d'encre pour photocopieurs ou imprimantes de manière à empêcher leur ré-utilisation.

Ceci sera obtenu en actionnant un code d'inhibition dans l'étiquette après la première utilisation, ce qui interdira une ré-utilisation.

A la réception par l'étiquette 10, les impulsions de la séquence qui a été émise par le lecteur 40 sont détectées par le circuit 22 et interprétées par le circuit 26 de manière à déterminer le type d'inhibition requis par le lecteur.

A titre indicatif, la fréquence Fr est de 10 Khz, soit une période de 100 microsecondes, et la durée de chaque impulsion 60 est de 5 à 20 microsecondes.

Selon une autre caractéristique de l'invention, ces séquences d'impulsions sont transmises par le dispositif de lecture à un moment particulier du dialogue entre l'étiquette électronique et le dispositif de lecture, par exemple, un intervalle de temps fixe τ après la réception du dernier message transmis par l'étiquette. Par ailleurs, l'étiquette électronique est mise en position d'écoute pendant un intervalle de temps T commençant après l'émission du dernier message, le temps T devant être suffisamment long pour permettre d'interpréter les séquences d'impulsions, par exemple quelques millisecondes.

L'invention a été décrite dans son application à l'obtention d'inhibitions mais il est clair qu'elle s'applique aussi à la réalisation dans l'étiquette électronique de toutes fonctions particulières.

L'invention a également été décrite en relation avec un codage réalisé sur la fréquence d'une séquence d'impulsions mais elle peut être mise en oeuvre avec d'autres types de codage tels que l'amplitude de la modulation du signal à la fréquence porteuse F₀ ou index de modulation, la position des impulsions à l'intérieur d'une fenêtre décrite de durée T ou par une combinaison de ces différents paramètres.

Le système et le procédé selon l'invention peuvent être mis en oeuvre en parallèle au système classique d'échange d'informations entre le lecteur et l'étiquette électronique. Cet échange consiste à transmettre des codes numériques qui modulent aussi en amplitude le signal à la fréquence porteuse F₀ mais ces codes numériques sont souvent longs, ce qui retarde d'autant leur décodage complet. Un tel retard n'existe pas dans le système et procédé de l'invention, ce qui permet d'effectuer très rapidement des opérations dans l'étiquette électronique.

## Revendications

1. Système pour réaliser des fonctions particulières dans des étiquettes électroniques (10) sans contact à l'aide d'un dispositif de lecture (40) émettant au travers d'une antenne (42) à circuit accordé des signaux à une fréquence porteuse F₀ modulés par un modulateur (50), lesdits signaux émis étant détectés par une antenne (12) à circuit accordé disposée sur chaque étiquette électronique (10), **caractérisé en ce que** :
- le dispositif de lecture (40) comprend, en outre, un générateur (58) d'une pluralité de séquences d'impulsions (60), lesdites impulsions (60) de chaque séquence étant appliquées au modulateur (50) pour modifier de manière caractéristique le signal à la fréquence porteuse,
- l'étiquette électronique (10) comprend, en outre, un circuit de détection (22) des impulsions à modulation caractéristique et un circuit d'interprétation (26) de la séquence d'impulsions en fonction de la caractéristique de modulation, et
- chaque séquence d'impulsions signifie une action différente sur les circuits de l'étiquette électronique (10).

2. Système selon la revendication 1, **caractérisé en ce que** la modulation caractéristique consiste en une suppression de la fréquence porteuse pendant la durée des impulsions de la séquence d'impulsions.

3. Système selon la revendication 1, **caractérisé en ce que** la modulation caractéristique consiste en une réduction de l'amplitude maximale du signal à la fréquence porteuse pendant la durée des impulsions de la séquence d'impulsions.

4. Système selon l'une quelconque des revendications précédentes 1 à 3, **caractérisé en ce que** les séquences d'impulsions sont transmises à l'étiquette électronique à des moments déterminés (τ) et **en ce que** l'étiquette électronique n'est réceptive à ces séquences d'impulsions qu'à ces moments déterminés pendant un intervalle de temps déterminé (T).

5. Procédé pour réaliser des fonctions particulières dans des étiquettes électroniques (10) sans contact à l'aide d'un dispositif de lecture (40) émettant au travers d'une antenne (42) à circuit accordé des signaux à une fréquence porteuse F₀ modulés par un modulateur (50) , lesdits signaux émis étant détectés par une antenne (12) à circuit accordé disposée sur chaque étiquette électronique (10), **caractérisé en ce qu'**il comprend les étapes suivantes consistant à :
(a) générer, dans le dispositif de lecture (40), au moins une séquence d'impulsions,
(b) moduler de manière caractéristique le signal à la fréquence porteuse (F₀) par la séquence d'impulsions,
(c) émettre le signal modulé obtenu par l'étape (b) en direction d'au moins une étiquette électronique (10),
(d) détecter, dans une étiquette électronique, le signal modulé émis,
(e) interpréter le signal démodulé en fonction de la caractéristique de modulation,
(f) agir sur au moins un des circuits de l'étiquette électronique (10) pour modifier au moins une fonction selon l'interprétation de l'étapes (e).

6. Procédé selon la revendication 5, **caractérisé en ce que** l'étape (b) consiste à supprimer le signal à la fréquence porteuse (F₀) pendant la durée de chaque impulsion de la séquence.

7. Procédé selon la revendication 5, **caractérisé en ce que** l'étape (b) consiste à réaliser une réduction déterminée de la valeur maximale de l'amplitude du signal à la fréquence porteuse (F₀).

## Claims

1. A system for implementing particular functions in contactless electronic labels (10) using a reading device (40) transmitting, through a tuned circuit antenna (42), signals at a carrier frequency F₀ modulated by a modulator (50), said transmitted signals being detected by a tuned circuit antenna (12) disposed on each electronic label (10), **characterised in that**:
- the reading device (40) furthermore comprises a generator (58) of a plurality of sequences of pulses (60), said pulses (60) of each sequence being applied to the modulator (50) in order to modify in a characteristic manner the signal at the carrier frequency;
- the electronic label (10) furthermore comprises a circuit (22) for detecting the pulses with characteristic modulation and a circuit (26) for interpreting the sequence of pulses according to the modulation characteristic; and
- each sequence of pulses means a different action on the circuits of the electronic label (10).

2. A system according to Claim 1, **characterised in that** the characteristic modulation consists of a suppression of the carrier frequency for the duration of the pulses of the pulse sequence.

3. A system according to Claim 1, **characterised in that** the characteristic modulation consists of a reduction of the maximum amplitude of the signal at the carrier frequency for the duration of the pulses of the pulse sequence.

4. A system according to any one of the preceding Claims 1 to 3, **characterised in that** the pulse sequences are transmitted to the electronic label at given moments (τ) , and **in that** the electronic label is receptive to these pulse sequences only at these given moments during a given time interval (T).

5. A method for implementing particular functions in contactless electronic labels (10) using a reading device (40) transmitting, through a tuned circuit antenna (42), signals at a carrier frequency F₀ modulated by a modulator (50), said transmitted signals being detected by a tuned circuit antenna (12) disposed on each electronic label (10), **characterised in that** it comprises the following steps consisting in:
(a) generating, in the reading device (40), at least one sequence of pulses;
(b) modulating, in a characteristic manner, the signal at the carrier frequency (F₀) by the sequence of pulses;
(c) transmitting the modulated signal obtained by the step (b) in the direction of at least one electronic label (10) ;
(d) detecting, in an electronic label, the transmitted modulated signal;
(e) interpreting the demodulated signal according to the modulation characteristic;
(f) acting on at least one of the circuits of the electronic label (10) in order to modify at least one function according to the interpretation of the steps (e).

6. A method according to Claim 5, **characterised in that** the step (b) consists in suppressing the signal at the carrier frequency (F₀) for the duration of each pulse of the sequence.

7. A method according to Claim 5, **characterised in that** the step (b) consists in implementing a given reduction of the maximum value of the amplitude of the signal at the carrier frequency (F₀)

## Patentansprüche

1. System zur Realisierung von Sonderfunktionen in kontaktlosen elektronischen Etiketten (10) mittels eines Lesegeräts (40), das über eine Antenne (42) mit abgestimmtem Schaltkreis Trägerfrequenzsignale F₀ aussendet, die mit Hilfe des Modulators (50) moduliert wurden und anhand der in jedem elektronischen Etikett (10) integrierten Antenne (12) mit Abstimmkreis festgestellt werden, **dadurch gekennzeichnet daß**:
• das Lesegerät (40) unter anderem einen Mehrfrequenzgenerator (58) mit einer Vielzahl von Impulssequenzen (60) umfasst, wobei die besagten Impulse (60) jeder Sequenz auf den Modulator (50) angewendet werden, um das Signal der Trägerfrequenz charakteristisch zu ändern.
• das elektronische Etikett (10) unter anderem einen Detektorkreis (22) der in charakteristischer Weise modulierten Impulse und einen Schaltkreis (26) zur Auswertung der Impulsfrequenz in Abhängigkeit der Modulationseigenschaften besitzt, und
• jede Impulssequenz eine unterschiedliche Aktion auf den Schaltkreisen des elektronischen Etiketts (10) bedeutet.

2. System gemäß Anspruch 1, **dadurch gekennzeichnet, daß** die charakteristische Modulation aus Unterdrückung der Trägerfrequenz während der Dauer der Impulse der Impulssequenzen besteht.

3. System gemäß Anspruch 1, **dadurch gekennzeichnet, daß** die charakteristische Modulation aus einer Verringerung der Maximalamplitude des Signals der Trägerfrequenz während der Dauer der Impulse der Impulssequenzen besteht.

4. System gemäß Anspruch 1 bis 3, **dadurch gekennzeichnet, daß** die Impulssequenzen zu ganz bestimmten Zeiten (τ) an das elektronische Etikett übertragen werden und dass das elektronische Etikett diese Impulssequenzen zu diesen bestimmten Zeitzen (τ) während eines bestimmten zeitlichen Intervalls (T) empfangen kann.

5. Verfahren zur Verwirklichung besonderer Funktionen in kontaktlosen elektronischen Etiketten (10) unter Einsatz eines Lesegeräts (40) , das über seine, mit einem abgestimmten Schaltkreis ausgestattete Antenne (42), von einem Modulator (50) beeinflußte Trägerfrequenzsignale F₀ sendet, die als durch eine auf jedem elektronischen Etikett (10) angeordnete Antenne (12) mit abgestimmtem Schaltkreis ausgesendet werden, **dadurch gekennzeichnet, dass** es die folgenden Schritte umfasst, bestehend darin, dass:
a) im Lesegerät (40) mindestens eine Impulssequenz erzeugt wird,
b) das Trägerfrequenzsignal (F₀) von der Impulssequenz in charakteristischer Weise moduliert wird,
c) das im Schritt (b erzeugte, modulierte Signal auf mindestens ein elektronisches Etikett (10) gerichtet ausgesendet wird,
d) das ausgesendete, modulierte Signal im Elektroniketikett festgestellt wird,
e) das im elektronische Etikett demodulierte Signal entsprechend seiner Modulationsform ausgewertet oder interpretiert wird,
f) auf wenigstens einen der Schaltkreise des elektronischen Etikettes (10) eingewirkt wird, um wenigstens eine Funktion gemäß der Interpretation der Stufen (e) zu ändern.

6. Verfahren gemäß Anspruch 5, **dadurch gekennzeichnet, daß** der Schritt (b) darin besteht, das Trägerfrequenzsignal (F₀) während jeder Impulssequenz zu unterdrücken.

7. Verfahren gemäß Anspruch (5., **dadurch gekennzeichnet, daß** der Schritt b) darin besteht, eine festgelegte Verminderung des maximalen Wertes der Amplitude des Trägerfrequenzsignals (F₀) vorzunehmen.
